# EUROPÄISCHE PATENTSCHRIFT

(11) **EP 2 986 544 B1**
(45) Veröffentlichungstag und Bekanntmachung des Hinweises auf die Patenterteilung: **12.06.2019**
(21) Anmeldenummer: 14724327.3
(22) Anmeldetag: 14.04.2014
(51) Int. Cl.: B65G 69/32

(54) **SPALTABDICHTUNG EINER BEWEGLICHEN VERKEHRSFLÄCHE**
GAP SEAL OF A MOVABLE TRAFFIC AREA
SYSTÈME DE CALFEUTRAGE D'UNE SURFACE DE CIRCULATION MOBILE

(30) Priorität: 15.04.2013 DE 202013101595 U
(43) Veröffentlichungstag der Anmeldung: 24.02.2016
(73) Patentinhaber: Kolassa, Dietmar, 48493 Wettringen (DE)
(72) Erfinder: Kolassa, Dietmar, 48493 Wettringen (DE)
(74) Vertreter: Habbel, Ludwig
(86) Internationale Anmeldenummer: PCT/EP2014/057557
(87) Internationale Veröffentlichungsnummer: WO 2014/170289

(56) Entgegenhaltungen:
- WO-A1-2006/098592
- DE-A1- 3 937 373
- DE-U1-202012 006 576
- JP-A- 2010 038 434
- US-A- 5 442 825
- US-A1- 2009 165 224
- US-A1- 2009 301 671
- US-A1- 2010 313 535
- Parker: "Conductive Elastomer Molded Reinforced Seals", , 30. April 2012 (2012-04-30), XP055136866, Gefunden im Internet: URL:http://vendor.parker.com/Groups/Seal/D ivisions/Chomerics/Chomerics Product Library.nsf/24eb4985905ece3485256958007455 7a/3f7cb4a09193945e85257a29006b6864/$FILE/ Conductive Elastomer Molded Reinforced Seals.pdf [gefunden am 2014-08-27]

## Beschreibung

Die Neuerung betrifft eine Spaltabdichtung einer beweglichen Verkehrsfläche, nämlich einer beweglichen Ladebrücke, nach dem Oberbegriff des Anspruchs 1.

Ladebrücken sind innerhalb eines Rahmens angeordnet und relativ zum Rahmen beweglich. Die Ladebrücken werden im Rahmen des vorliegenden Vorschlags als Verkehrsflächen bezeichnet, da sie einen Teil eines zu begehenden oder zu befahrenden Weges darstellen. Die Ladebrücken sind üblicherweise schwenkbar, können also aus einer horizontalen Ruhestellung in eine schräg nach oben oder schräg nach unten weisende Gebrauchsstellung geschwenkt werden, beispielsweise um an einer Laderampe einen Höhenausgleich zum Laderaum eines Fahrzeugs zu schaffen. Es ergibt sich bei den beweglichen Ladebrücken ein Spalt zwischen dieser Ladebrücken und dem umgebenden Rahmen. Wenn die beweglichen Ladebrücken im Übergangsbereich zwischen dem Inneren eines Gebäudes, beispielsweise einer Lagerhalle, und der Außenwelt angeordnet sind, stellen die um die Ladebrücke verlaufenden Spalten eine erhebliche Kältebrücke dar, welche die thermische Isolierung des Gebäudes in erheblichem Maße beeinträchtigt, da durch den jeweiligen Spalt Luft ungehindert strömen kann.

Aus diesem Grunde ist es aus der Praxis bekannt, eine gattungsgemäße Spaltabdichtung zu verwenden. Diese weist ein Rahmenprofil mit einem etwa C-förmigen Querschnitt auf, welches als längliche Schiene ausgestaltet ist und entweder an der Ladebrücke oder an dem Rahmen befestigt werden kann. Von diesem Halteabschnitt aus erstreckt sich ein Dichtungsabschnitt zum gegenüberliegenden Bauteil, also beispielsweise von der Ladebrücke bis zum Rahmen oder, wenn die Abdichtung am Rahmen befestigt ist, bis zur Ladebrücke. Dieser Dichtungsabschnitt kann beispielsweise als Dichtungslippe aus einem Elastomerwerkstoff ausgestaltet sein oder in Form einer Bürste ausgestaltet sein.

Die US 5 442 825 A offenbart eine Spaltabdichtung nach dem Oberbegriff des Anspruchs 1, die mittels eines Häkchen-bzw. Klettverschlusses an der beweglichen Verkehrsfläche befestigt ist. Daher ist einerseits ein erster Haltestreifen vorgesehen, der an der beweglichen Verkehrsfläche montiert ist. Der Dichtungsabschnitt weist den damit zusammenwirkenden zweiten Haltestreifen auf und ist elastisch nachgiebig und kompressibel ausgestaltet. Hierzu weist der Dichtungsabschnitt einen entsprechend elastischen und kompressiblen Kern auf, beispielsweise aus einem Polyurethanschaum, mit einem beispielsweise dreieckigen Querschnitt, und mit einer äußeren Hüllschicht.

Aus der JP 2010 038 434 A ist eine Spaltabdichtung bekannt, die zur Abdichtung eines Innenrahmens dient, der in das Innere des Laderaums eines LKWs eintauchen kann und die den Innerahmen z. B. gegenüber dem Dach des LKW-Laderaums abdichtet. Dabei können für die Spaltabdichtung unterschiedliche Hohlprofile verwendet werden.

Aus der Firmendruckschrift "Parker: "Conductive Elastomer Molded Reinforced Seals", 30. April 2012, XP 055 136 68 66" sind Dichtstreifen bekannt, die als Elastomerdichtungen in Form flaeher Streifen oder in Form von Hohlprofilen ausgestaltet sein können.

Aus der DE 20 2012 006 576 U1 ist eine Spaltdichtung bekannt, die ein Polster aufweist, welches aus einer flexiblen, gasdichten Folie gebildet ist und für den Gebrauch aufgeweitet werden kann.

Aus der US 2010/0313535 A1 ist eine Spaltabdichtung bekannt, die ein flexibles Flächenelement aufweist, welches auf einer Seite mit magnetischen Haltestreifen bestückt ist. Lücken zwischen den Haltestreifen sind dort vorgesehen, wo das Flächenelement stark verformt werden soll, beispielsweise rechtwinklig abgekantet werden soll. So lässt sich die Spaltabdichtung beispielsweise an mehrere Seiten eines rechteckigen Gehäuses anlegen.

Aus der US 2009/0301671 A1 ist eine Windschutzscheiben-Abdeckung für Automobile bekannt, mittels derer die Windschutzscheibe gegen Einflüsse des Winterwetters geschützt werden kann, beispielsweise gegen Vereisung. Während der Rand dieser Abdeckung mittels einer Vielzahl einzelner, voneinander beabstandeter Magnete an der Fahrzeugkarosserie festgelegt werden kann, halten zusätzliche Saugelemente die Fläche der Abdeckung an der Windschutzscheibe.

Aus der WO 2006/098592 A1 ist eine Spaltabdichtung bekannt, die an der Unterkante einer Tür montiert wird. Zwei voneinander beabstandete Klebestreifen werden an den beiden gegenüberliegenden Flächen der Tür befestigt, und der dazwischen befindliche Dichtungsabschnitt reicht bis zum Boden unterhalb der Tür und dichtet den Spalt ab.

Aus der DE 39 37 373 A1 ist eine Spaltdichtung bekannt, die zur Abdichtung zwischen einer beweglichen Brückenplatte und einem Randabschlussrahmen dient, welcher die Brückenplatte im Abstand umgibt. Die Spaltabdichtung kann beispielsweise mittels einer Gummimatte erfolgen, die einerseits an der Brückenplatte und andererseits an dem Randabschlussrahmen befestigt ist, oder mittels eines Dichtschlauches, der diesen beiden Bauteilen anliegt. Zudem weist bereits die Brückenplatte selbst eine Isolationsschicht auf.

Ach aus der US 2009/165224 A1 ist eine Spaltdichtung bekannt, die zur Abdichtung eines Spalts dient, welcher sich im Scharnierbereich zwischen dem Hauptteil einer beweglichen Ladebrücke und einem daran anscharnierten Randstreifen ergeben kann, wenn der Randstreifen nämlich den Hauptteil nicht verlängert, sondern gegenüber dem Hauptteil abgewinkelt ist. Eine Mehrzahl von Dichtungen ist dabei vorgesehen, die sich jeweils zwischen zwei benachbarten Scharnierlaschen erstrecken. Die Dichtungen können aus Metallblech, aus einem Schaum, Kunststoff oder Gummi bestehen, oder als Bürste ausgestaltet sein und mittels Schrauben, Klebstoff, Verschweißung, oder auf andere geeignete Weise befestigt sein. Bei einer Befestigung mittels Magneten ist vorgesehen, dass zwei gegenüberliegende Ränder der Dichtung an den beiden zu überbrückenden Bauteilen gehalten werden, so dass ein erster Magnet die Dichtung an dem Hauptteil der Ladebrücke hält und ein zweiter Magnet den gegenüberliegenden Rand der Dichtung an dem Randstreifen hält.

Der Neuerung liegt die Aufgabe zugrunde, eine gattungsgemäße Spaltabdichtung dahingehend zu verbessern, dass diese möglichst preisgünstig ausgestaltet ist, eine möglichst gute Dichtungswirkung auch über einen längeren Zeitraum sicherzustellen in der Lage ist und möglichst unanfällig gegen eventuelle Beschädigungen ist.

Diese Aufgabe wird durch eine Spaltabdichtung mit den Merkmalen des Anspruchs 1 gelöst.

Die Neuerung schlägt mit anderen Worten erfindungsgemäß vor, den Halteabschnitt und den Dichtungsabschnitt der Spaltabdichtung jeweils aus einem Abschnitt eines textilartig verformbaren Flächenelementes herzustellen. Der Halteabschnitt kann entweder an der beweglichen Ladebrücke oder an dem Rahmen montiert werden, so dass jedenfalls der Dichtungsabschnitt den Spalt überbrückt und dementsprechend abdichtet. Im Vergleich zu Bürsten, die mit einer bestimmten Borstenlänge hergestellt werden, oder im Vergleich zu Elastomerprofilen, die mit einem vorbestimmten Profilquerschnitt hergestellt werden, können erfindungsgemäß die Halte- bzw. Dichtungsabschnitte besonders preisgünstig hergestellt und auch in kleinsten Serien oder als Einzelanfertigung individuell bemessen werden, da sie als Abschnitt aus einem erheblich größeren Flächenelement preisgünstig zugeschnitten werden können. Somit sind auch unterschiedliche Abmessungen besonders einfach und wirtschaftlich zu verwirklichen, beispielsweise wenn Spaltabdichtungen unterschiedlicher Art hergestellt werden sollen, bei denen die Halteabschnitte unterschiedliche Abmessungen aufweisen.

Als textilartig verformbar wird dabei ein Flächenelement bezeichnet, welches nicht wie beispielsweise eine Holz- oder Metallplatte vergleichsweise starr ist, sondern welches wie ein textiles Flächenelement reversibel verformt werden kann, wie dies z. B. von einem textilen Flächenelement bekannt ist, welches gerollt oder gefaltet werden kann oder aus welchem z. B. ein Beutel oder dergleichen hergestellt werden kann. So soll durch die Bezeichnung der "textilartigen Verformbarkeit" des erfindungsgemäß für das Flächenelement infrage kommenden Materials zum Ausdruck gebracht werden, dass beispielsweise textile Flächenelemente wie Gewebe, Gewirke oder dergleichen, oder dass beispielsweise Folien, oder dass beispielsweise eine Kombination daraus in Form faserverstärkter Folien, benutzt werden können. Die erfindungsgemäß verwendbaren Flächenelemente können beispielsweise zusammenfassend als Planen bezeichnet werden. Nachfolgend wird daher das verwendete Ausgangsmaterial stets als Plane bezeichnet, unabhängig davon, ob es sich um eine Folie handelt, um ein textiles Element, oder um eine mit Fasern verstärkte Folie.

Erfindungsgemäß ist weiterhin vorgesehen, dass der Halteabschnitt und der Dichtungsabschnitt einteilig aus demselben Flächenelement gebildet sind. Auf diese Weise wird die Ausgestaltung von Halte- und Dichtungsabschnitt dadurch vereinfacht, dass ein entsprechend breiter Materialzuschnitt des Flächenelements einfach in eine Falte gelegt wird, so dass sich ein etwa omegaförmiger Querschnitt des Flächenelements ergibt. Die beiden Ränder eines solchen omegaförmigen Querschnittsverlaufs ergeben dann zwei Teilabschnitte des Halteabschnitts, und die vorstehende Falte bildet den Dichtungsabschnitt.

Der auf diese Weise als Falte ausgestaltete Dichtungsabschnitt kann auf einfache Weise gereinigt werden, indem er beispielsweise mittels eines Wasserstrahls in seiner Längsrichtung durchspült wird. Es kann jedoch auch vorgesehen sein, beispielsweise in hygienisch besonders anspruchsvollen Umgebungen, wie in der Lebensmittel verarbeitenden Industrie, dass der Dichtungsabschnitt vorteilhaft an seinen beiden Enden geschlossen ist, so dass das Eindringen von Verschmutzungen in den Dichtungsabschnitt zuverlässig ausgeschlossen ist. Beispielsweise kann die Falte an ihren beiden Enden verklebt sein.

Weiterhin ist aus hygienischen Gründen vorteilhaft, dass vorschlagsgemäß das Flächenelement als Folie oder Plane mit einer geschlossenen Oberfläche ausgestaltet ist. Im Gegensatz beispielsweise zu einem textilen, gewebeartigen Flächenelement, bei welchem die außen liegenden Gewebestrukturen das Eindringen oder Anhaften von Verschmutzungen erleichtern würden, wird durch die geschlossene äußere Oberfläche das Anhaften von Verschmutzungen erschwert und eine Reinigung der Spaltabdichtung erleichtert. Abgesehen von den hygienischen Vorteilen kann durch die geschlossene Ausgestaltung der Oberfläche auch deren Reibungswiderstand verringert werden, so dass eine langlebige Funktionssicherheit der Spaltabdichtung erzielt werden kann.

Fertigungstechnisch vorteilhaft sind der Halteabschnitt und der Dichtungsabschnitt einteilig aus demselben Flächenelement gebildet.

Erfindungsgemäß weist das Flächenelement eine textile Verstärkung auf, so dass es im Vergleich zu einem als Folie ausgestalteten Flächenelement eine besonders hohe mechanische Stabilität aufweist. Aufgrund der Relativbewegung zwischen der Ladebrücke und dem umgebenden Rahmen erfolgt eine regelmäßig wechselnde Bewegung des Dichtungsabschnitts, indem dieser, ausgehend von einer im Wesentlichen liegend ausgerichteten Ladebrücke, nach oben oder nach unten weisend umgeklappt wird, wenn sich die Ladebrücke gegenüber dem umgebenden Rahmen bewegt. Auch aus diesem Grund ist eine hohe mechanische Stabilität der Spaltabdichtung vorteilhaft, insbesondere ihres Dichtungsabschnitts bzw. im Übergangsbereich zwischen Halte- und Dichtungsabschnitt.

Erfindungsgemäß ist schließlich auch vorgesehen, dass der Halteabschnitt des Flächenelements auf einem magnetischen Trägerstreifen befestigt ist. Auf diese Weise wird eine besonders einfache Montage der Spaltabdichtung an beispielsweise einer metallischen Ladebrücke ermöglicht oder an einem häufig vorgesehenen metallischen Kantenschutz des die Ladebrücke umgebenden Rahmens. Wenn beispielsweise eine Laderampe aus Beton gefertigt ist, weist sie typischerweise in den Ausschnitten, in denen eine Ladebrücke in dieser Laderampe vorgesehen ist, eine Kantenverstärkung in Form eines umlaufenden Stahlblechs auf, so dass an dieser Kantenverstärkung die Spaltabdichtung problemlos magnetisch angebracht werden kann. Es hat sich überraschend herausgestellt, dass die magnetische Haltekraft problemlos so groß ist, dass die Spaltabdichtung verschiebegesichert befestigt werden kann. Dabei weist der Trägerstreifen eine Breite von beispielsweise 7 bis 15 cm auf und eine Länge von beispielsweise 1 bis 2 m. Größere Breiten sind problemlos möglich, und auch größere Längen sind problemlos, da z. B. bei Verwendung einer handelsüblichen Magnetfolie als Trägerstreifen dieser Trägerstreifen zusammen mit den aufgeklebten Halte- und Dichtungsabschnitten aufgerollt transportiert werden kann, aufgrund der textilen Verformbarkeit des für die Halte- und Dichtungsabschnitte verwendeten Flächenelements.

Eine magnetische Befestigung ist gegenüber einer Verschraubung der Spaltabdichtung insofern vorteilhaft, als weder die Statik des betreffenden metallischen Untergrundes durch Bohrlöcher beeinträchtigt werden muss, noch eine Oberflächenbeschichtung des Untergrundes, beispielsweise eine Lackierung oder Verzinkung, durch die Schaffung von Bohrlöchern verletzt werden muss, was den Korrosionsschutz des Untergrundes beeinträchtigen würde.

Die magnetische Befestigung ermöglicht jedoch auf einfache Weise ein Auswechseln der Spaltabdichtung, wenn diese beispielsweise mechanisch beschädigt sein sollte. Auch kommt es in der Praxis immer wieder vor, dass Fremdkörper wie beispielsweise Holzstückchen oder ähnliche Körper in den Spalt zwischen der Ladebrücke und den umgebenden Rahmen geraten. Wenn diese belastet werden, z. B. mittels eines Fahrzeugs überfahren werden, drücken sie auf die Spaltabdichtung. Die magnetische Befestigung ermöglicht eine Verschiebung der Spaltabdichtung, ohne dass die Spaltabdichtung verformt oder beschädigt wird, so dass die magnetische Befestigung eine Funktion des Überlastungsschutzes bietet. Die Spaltabdichtung kann besonders einfach und in kürzester Zeit vom Untergrund abgenommen und neu positioniert wieder angebracht werden, wenn sie magnetisch befestigt ist, so dass hierdurch eine besonders langlebige, funktionssichere und beschädigungsfreie Nutzung der Spaltabdichtung ermöglicht werden kann.

Wenn sich die bewegliche Ladebrücke in ihrer Ruhestellung, beispielsweise niveaugleich, mit dem umgebenden Rahmen befindet, ist die Spaltabdichtung üblicherweise unzugänglich. Ein Diebstahl der Spaltabdichtung ist daher auch dann nicht zu befürchten, wenn diese lediglich reversibel befestigt ist, beispielsweise wie erwähnt magnetisch befestigt ist.

Durch die Ausgestaltung des Dichtungsabschnitts als Abschnitt eines größeren Flächenelements können problemlos und preisgünstig Dichtungsabschnitte unterschiedlich großer wirksamer Breite bzw. Länge hergestellt werden, beispielsweise in Anpassung an die jeweils in der Praxis vorhandene Spaltbreite. Daher kann die Länge oder Breite des Dichtungsabschnitts sowie dessen Abstand von der Oberkante des Trägerabschnitts so bemessen sein, dass bei einer definierten Montageposition des Trägerabschnitts der Dichtungsabschnitt bis an die Oberfläche der Ladebrücke bzw. des Rahmens reicht.

Da der Halteabschnitt nicht durch eine Verschraubung befestigt wird, sondern magnetisch an den Untergrund gehalten wird und insofern eine besonders große Freiheit gegeben ist, was die Anbringung der Spaltabdichtung auf den Untergrund angeht, da nicht auf bestimmte für ein Anbohren geeignete Stellen des Untergrundes Rücksicht genommen zu werden braucht, kann auch allein durch die Wahl des Montageortes sichergestellt werden, dass der Dichtungsabschnitt bis an die Oberfläche der Ladebrücke bzw. des Rahmens reicht. Auf diese Weise wird der Spalt nicht nur quer, also zwischen dem Rahmen und der Ladebrücke, abgedichtet, sondern auch nach oben hin, d. h., dass dort, wo beispielsweise eine Torfläche nach unten bis auf die bewegliche Ladebrücke ragt, zwischen diesem Tor und dem Spalt ein möglichst geringer Freiraum verbleibt, so dass die gewünschte Abdichtungswirkung, den die Spaltabdichtung für die gesamte Gebäudehülle bewirkt, nochmals verbessert ist.

Vorteilhaft kann vorgesehen sein, definierte Verschleißeigenschaften zu gewährleisten, um auf diese Weise eine möglichst hohe Langlebigkeit der Spaltabdichtung zu gewährleisten. Aus diesem Grund kann vorteilhaft vorgesehen sein, dass nicht nur die erwähnte Spaltabdichtung mit dem Trägerabschnitt und dem Dichtungsabschnitt vorgesehen ist, sondern dass auch als separates Bauteil ein zweiter Streifen vorgesehen ist, der als Dichtstreifen bezeichnet ist und die Dichtfläche bereitstellt, welcher der Dichtungsabschnitt anliegt. Bei einer Relativbewegung zwischen dem Rahmen und der Ladebrücke streift also der Dichtungsabschnitt der Spaltabdichtung an dem Dichtstreifen entlang und nicht etwa an einer gemauerten oder betonierten oder in Form eines Stahlblechs bereitgestellten Dichtfläche, so dass durch die geeignete Oberflächenbeschaffenheit des Dichtstreifens ein minimaler Verschleiß des Dichtungsabschnittes bei derartigen Relativbewegungen sichergestellt werden kann.

Vorteilhaft kann vorgesehen sein, dass die Spaltabdichtung als Gefahrenkennzeichnung gestaltet ist, beispielsweise sind schräg verlaufende gelb-schwarze Streifen geeignet, eine solche Gefahrenkennzeichnung zu schaffen. Dadurch, dass bei einer Relativbewegung der Ladebrücke gegenüber dem umgebenden Rahmen sowohl eine Stolperkante geschaffen werden kann als auch ggf. Quetschgefahren bestehen können, ist es vorteilhaft, sowohl die Kante der beweglichen Ladebrücke als auch die ortsfest verbleibende Kante des die Ladebrücke umgebenden Rahmens mit einer solchen Gefahrenkennzeichnung zu versehen. Daher kann vorteilhaft vorgesehen sein, sowohl die Spaltabdichtung, die den Halteabschnitt und den Dichtungsabschnitt aufweist, als auch den gegenüberliegend vorgesehenen Dichtstreifen in Art einer solchen Gefahrenkennzeichnung farbig zu gestalten.

Ein Ausführungsbeispiel der Neuerung wird anhand der rein schematischen Darstellungen nachfolgend näher erläutert. Dabei zeigt
- Fig. 1: eine perspektivische Ansicht auf einen magnetischen Trägerstreifen, auf dem ein Halteabschnitt und ein Dichtungsabschnitt der Spaltabdichtung angeordnet sind, und
- Fig. 2: eine perspektivische und ausschnittsweise Ansicht auf eine Ladebrücke innerhalb einer Laderampe.

In den Zeichnungen ist mit 1 ein Dichtungsprofil bezeichnet, welches einen Abschnitt eines flexiblen Flächenelements 2 aufweist sowie einen aus einer Magnetfolie gebildeten magnetischen Trägerstreifen 3. Das Flächenelement 2 ist einteilig und bildet durch einen im wesentlichen Omega-förmigen Querschnittsverlauf einerseits einen zweiteiligen Halteabschnitt 4 aus sowie dazwischen einen zweilagigen Dichtungsabschnitt 5. Auf den Trägerstreifen 3 sind die beiden Abschnitte des Halteabschnitts 4 aufgeklebt, so dass das gesamte Dichtungsprofil 1 magnetisch an einem ferromagnetischen Untergrund befestigt werden kann.

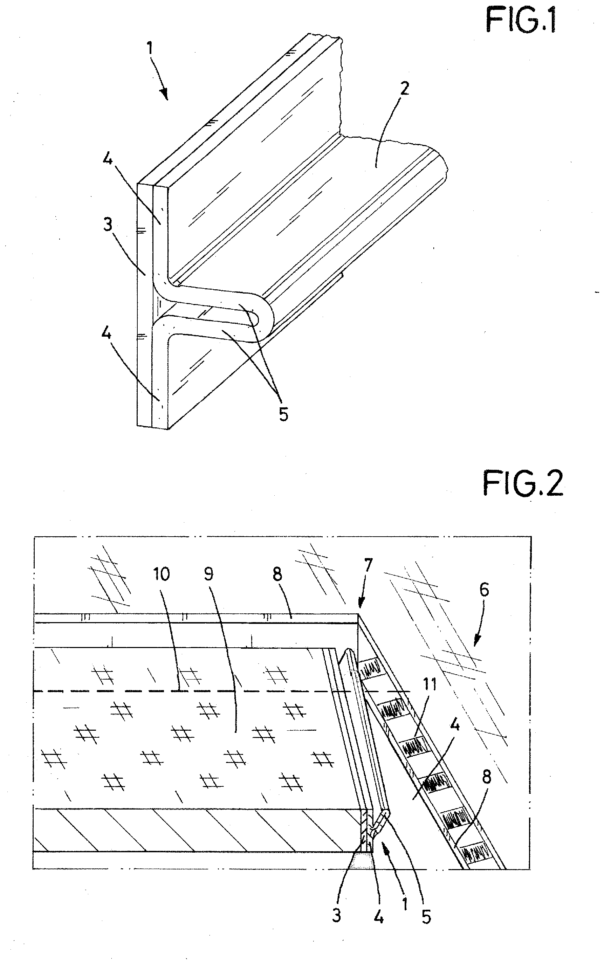

Fig. 2 zeigt in einer schematischen perspektivischen Ansicht auf den Ausschnitt einer Laderampe 6, die einen etwa U-förmigen Ausschnitt 7 aufweist, welcher mit einer metallischen, aus Stahlblech gebildeten Kantenverstärkung versehen ist. Die Laderampe 6 und die metallische Kantenverstärkung bilden einen etwa U-förmigen Rahmen 8, der um eine ebenfalls lediglich ausschnittsweise dargestellte Ladebrücke 9 verläuft. Die Ladebrücke 9 ist um eine gestrichelt angedeutete Schwenkachse 10 schwenkbar und befindet sich in Fig. 2 in ihrer nach unten abgesenkten Stellung.

An einer Seitenkante der Ladebrücke 9 ist das Dichtungsprofil 1 ersichtlich. Dessen Dichtungsabschnitt 5 steht nach oben, weil sich die Ladebrücke 9 gegenüber dem Rahmen 8 nach unten abgesenkt hat und dabei der Dichtungsabschnitt 5 dementsprechend nach oben umgelegt wurde. Wenn die Ladebrücke 9 aus ihrer dargestellten Gebrauchsstellung in eine Ruhestellung verbracht wird, in welcher sie niveaugleich mit der umgebenden Oberfläche der Laderampe 6 abschließt, wird sie zunächst über den Rahmen 8 hinaus nach oben abgehoben, so dass am freien Ende der Ladebrücke - in Fig. 2 nicht dargestellt - ein dort befindlicher Klappkeil eingeklappt werden kann. Beim Anheben wird der Dichtungsabschnitt 5, wenn er an dem Rahmen 8 entlang streift, nach unten umgelegt. Erst aus dieser angehobenen Stellung fährt die Ladebrücke 9 dann wieder geringfügig nach unten in ihre erwähnte Ruhestellung. Dabei wird der Dichtungsabschnitt 5, wenn er an dem Rahmen 8 entlang streift, dann wieder nach oben umgelegt. Aufgrund der stets zuletzt vorgenommenen Absenkbewegung befindet sich der Dichtungsabschnitt 5 stets in einer nach außen und oben ansteigenden Ausrichtung, ähnlich wie in Fig. 2 dargestellt, wenn die Ladebrücke 9 ihre Ruhestellung einnimmt.

Dabei ragt der Dichtungsabschnitt 5 so weit nach oben, dass er etwa mit dem Flurniveau der Laderampe 6 bündig endet. Zwischen der Unterkante eines Tors, welches sich teils über die Laderampe 6 erstreckt und über die Ladebrücke 9, und welches im abgesenkten Zustand der Laderampe 6 und auf Ladebrücke 9 aufsteht, und dem Dichtungsabschnitt 5 verbleibt daher ein möglichst geringer Zwischenraum, so dass das Dichtungsprofil 1 nicht nur den Spalt zwischen der Laderampe 6 und der Ladebrücke 9 abdichtet, sondern auch die Lücke zwischen diesem Spalt und der Unterkante des Tors möglichst gut schließt.

In Fig. 2 ist weiterhin ein Dichtstreifen 11 ersichtlich, der am Rahmen 8 angebracht ist und der eine definierte Dichtfläche schafft. Dieser Dichtfläche liegt der Dichtungsabschnitt 5 an, wenn sich die Ladebrücke 9 in ihrer Ruhestellung befindet. Der Dichtstreifen 11 ist durch schräg verlaufende gelb-schwarze Streifen als Gefahrenkennzeichnung gestaltet. Vorteilhaft können der Dichtstreifen 11 und das flexible Flächenelement 2 aus dem gleichen Material bestehen, so dass auch das flexible Flächenelement 2 durch eine entsprechend farbige Gestaltung als Gefahrenkennzeichnung dienen kann. Auch der Dichtstreifen 11 weist einen magnetischen Trägerstreifen 3 auf und ist dementsprechend magnetisch an der Kantenverstärkung des Rahmens 8 festgelegt.

## Patentansprüche

1. Spaltabdichtung einer innerhalb eines Rahmens (8) angeordneten und gegenüber dem Rahmen (8) beweglichen Ladebrücke (9),
mit einem Dichtungsprofil (1), welches ein textilartig reversibel verformbaren Flächenelement (2) und einen Trägerstreifen (3) umfasst,
wobei das Flächenelement (2) einteilig ist und einen zweiteiligen Halteabschnitt (4) sowie dazwischen einen zweilagigen Dichtungsabschnitt (5) ausbildet, der gegenüber dem zweiteiligen Halteabschnitt (4) vorsteht, wobei das Flächenelement (2) als Folie oder Plane mit einer geschlossenen Oberfläche ausgestaltet ist,
und eine textile Verstärkung aufweist,
wobei das Dichtungsprofil (1) an der Ladebrücke (9) oder dem Rahmen (8) mittels des Trägerstreifens (3) befestigt ist,
**dadurch gekennzeichnet,**
**dass** der Trägerstreifen (3) ein magnetischer Trägerstreifen (3) ist und aus einer Magnetfolie gebildet ist,
und der zweiteilige Halteabschnitt (4) derart auf dem magnetischer Trägerstreifen (3) befestigt ist, dass das Flächenelement (2) einen im wesentlichen omegaförmigen Querschnittsverlauf ausbildet
und der Dichtungsabschnitt (5) hohl ausgestaltet ist.

2. Spaltabdichtung nach Anspruch 1,
**dadurch gekennzeichnet,**
**dass** der Dichtungsabschnitt (5) an seinen beiden Längsrichtungs-Enden geschlossen ist.

3. Spaltabdichtung nach Anspruch 1 oder 2,
**dadurch gekennzeichnet,**
**dass** der Halteabschnitt (4) des Flächenelements (2) selbstklebend ausgestaltet ist.

4. Spaltabdichtung nach einem der vorhergehenden Ansprüche,
**dadurch gekennzeichnet,**
**dass** der Dichtungsabschnitt (5) bis an die Oberfläche der Ladebrücke (9) oder des Rahmens (8) reichend ausgestaltet ist.

5. Spaltabdichtung nach einem der vorhergehenden Ansprüche,
**dadurch gekennzeichnet,**
**dass** auf dem Rahmen (8) oder der Ladebrücke (9), dem Dichtungsabschnitt (5) gegenüberliegend, ein Dichtstreifen (11) angeordnet ist, der eine mit dem Dichtungsabschnitt (5) zusammenwirkende Dichtfläche schafft,
derart, dass während der Relativbewegung zwischen dem Rahmen (8) und der Ladebrücke (9) der Dichtstreifen (11) dem Dichtungsabschnitt (5) anliegt.

6. Spaltabdichtung nach Anspruch 5,
**dadurch gekennzeichnet,**
**dass** der Dichtstreifen (11) auf einem magnetischen Trägerstreifen (3) befestigt ist.

7. Spaltabdichtung nach einem der vorhergehenden Ansprüche,
**dadurch gekennzeichnet,**
**dass** der Halteabschnitt (4), der Dichtungsabschnitt (5) und / oder der Dichtstreifen (11) in Art einer Gefahrenkennzeichnung farbig gestaltet ist.

## Claims

1. Gap seal for a loading ramp (9) that is arranged inside a frame (8) and is moveable relative to the frame (8),
having a seal profile (1) that encloses a surface element (2) that can be reversibly deformed like a textile, and a carrier strip (3),
where the surface element (2) is a made as a single piece and forms a two-piece retaining section (4) and between these a two-layered sealing section (5) that protrudes relative to the two-piece retaining section (4),
where the surface element (2) is designed as a foil or cover sheet with a closed surface
and incorporates a textile reinforcement,
where the seal profile (1) is fastened to the loading ramp (9) or the frame (8) by means of the carrier strip (3),
**characterised in that** the carrier strip (3) is a magnetic carrier strip (3) and is made from magnetic foil,
and the two-piece retaining section (4) is fastened onto the magnetic carrier strip (3) in such a way that the surface element (2) has an essentially omega-shaped cross-sectional configuration
and the sealing section (5) is designed hollow.

2. Gap seal in accordance with claim 1, **characterised in that** the sealing section (5) is closed at its two longitudinal ends.

3. Gap seal in accordance with claim 1 or 2, **characterised in that** the retaining section (4) of the surface element (2) is designed self-adhesive.

4. Gap seal in accordance with any one of the foregoing claims, **characterised in that** the sealing section (5) is designed to extend as far as the surface of the loading ramp (9) or the surface of the frame (8).

5. Gap seal in accordance with any one of the foregoing claims, **characterised in that** a sealing strip (11) that provides a sealing surface co-acting with the sealing section (5) is arranged on the frame (8) or the loading ramp (9) and opposite the sealing section (5) in such a way that during the relative movement between the frame (8) and the loading ramp (9) the sealing strip (11) lies against the sealing section (5).

6. Gap seal in accordance with claim 5, **characterised in that** the sealing strip (11) is fastened onto a magnetic carrier strip (3).

7. Gap seal in accordance with any one of the foregoing claims, **characterised in that** the retaining section (4), the sealing section (5) and/or the sealing strip (11) is or are designed coloured in the manner of a danger sign.

## Revendications

1. Joint à fente d'un pont de chargement (9) agencé à l'intérieur d'un cadre (8) et déplaçable par rapport au cadre (8),
avec un profil d'étanchéité (1), comprenant un élément surfacique (2) déformable réversiblement de type textile et un ruban de support (3),
sachant que l'élément surfacique (2) est configuré monobloc et forme un segment de retenue (4) en deux parties ainsi qu'un segment d'étanchéité (5) en deux couches se trouvant entremis, qui fait saillie par rapport au segment de retenue (4) en deux parties,
sachant que l'élément surfacique (2) est configuré en feuille ou bâche avec une surface fermée
et présente un renforcement textile,
sachant que le profil d'étanchéité (1) est fixé au pont de chargement (9) ou au cadre (8) au moyen du ruban de support (3),
**caractérisé en ce que** le ruban de support (3) est un ruban de support magnétique (3) et est configuré en feuille magnétique,
et que le segment de retenue (4) en deux parties est fixé sur le ruban de support (3) magnétique de telle sorte, que l'élément surfacique (2) forme une section essentiellement en forme d'oméga
et que le segment d'étanchéité (5) est configuré creux.

2. Joint à fente selon la revendication 1, **caractérisé en ce que** le segment d'étanchéité (5) est fermé à ses deux extrémités en direction longitudinale.

3. Joint à fente selon la revendication 1 ou 2, **caractérisé en ce que** le segment de retenue (4) de l'élément surfacique (2) est configuré autocollant.

4. Joint à fente selon l'une des revendications précédentes, **caractérisé en ce que** le segment d'étanchéité (5) est configuré s'étendant jusqu'à la surface du pont de chargement (9) ou du cadre (8).

5. Joint à fente selon l'une des revendications précédentes, **caractérisé en ce qu'**un ruban d'étanchéité (11) est agencé sur le cadre (8) ou le pont de chargement (9), en face du segment d'étanchéité (5), ruban lequel forme une surface d'étanchéité interagissante avec le segment d'étanchéité (5), de telle sorte que, lors du mouvement relatif entre le cadre (8) et le pont de chargement (9), le ruban d'étanchéité (11) applique le segment d'étanchéité (5).

6. Joint à fente selon la revendication 5, **caractérisé en ce que** le ruban d'étanchéité (11) est fixé sur un ruban de support (3) magnétique.

7. Joint à fente selon l'une des revendications précédentes, **caractérisé en ce que** le segment de retenue (4), le segment d'étanchéité (5) et/ou le ruban d'étanchéité (11) est configuré/sont configurés en couleurs sous forme d'une signalisation de dangers.
